# EUROPÄISCHE PATENTSCHRIFT

(11) **EP 2 530 291 B1**
(45) Veröffentlichungstag und Bekanntmachung des Hinweises auf die Patenterteilung: **12.08.2015**
(21) Anmeldenummer: 12158639.0
(22) Anmeldetag: 08.03.2012
(51) Int. Cl.: F02M 13/08, F02M 21/04

(54) **Verfahren zum Betrieb von Gasmotoren mit einem CH4-haltigen Schwachgas und Mischvorrichtung zur Durchführung des Verfahrens**
Method for operating gas engines with a lean gas containing CH4 and mixing device for performing the method
Procédé de fonctionnement de moteurs à gaz dotés d'un gaz pauvre contenant du CH4 et dispositif de mélange destiné à l'exécution du procédé

(30) Priorität: 01.06.2011 DE 102011050802
(43) Veröffentlichungstag der Anmeldung: 05.12.2012
(73) Patentinhaber: Green Gas Germany GmbH, 40670 Meerbusch (DE)
(72) Erfinder: Beek, Manfred, 47809 Krefeld (DE); Egeren, Dirk van, 47475 Kamp-Lintfort (DE); Schäning, Ralf, 28876 Oyten (DE); Keuthen, Michael, 47906 Kempen (DE)
(74) Vertreter: Albrecht, Rainer Harald

(56) Entgegenhaltungen:
- WO-A2-2007/104046
- DE-C- 764 982
- DE-U1- 8 634 567
- FR-A- 887 730
- US-A- 3 646 924

## Beschreibung

Die Erfindung betrifft ein Verfahren zum Betrieb von Gasmotoren mit einem CH₄-haltigen Schwachgas. Unter den Begriff Schwachgas fallen Brenngasgemische, bei denen die brennbaren Gase, wie Methan oder andere gasförmige Kohlenwasserstoffe, Wasserstoff und/oder Kohlenmonoxid mit nicht brennbaren Komponenten, wie Stickstoff, Kohlendioxid oder Wasserdampf verdünnt sind.

Um einen Gasmotor zum Zwecke der Verstromung zu betreiben, benötigt dieser ein brennfähiges Gasgemisch. Üblich ist die Verstromung von Grubengas oder vergleichbarer Gasarten mit einer minimalen CH₄-Konzentration von etwa 30 Vol-%. Bei CH₄-Konzentrationen unterhalb dieses Grenzwertes ist der Betrieb des Gasmotors eingeschränkt bis gar nicht möglich. Zur Förderung von Grubengas oder vergleichbarer Gasarten und zur Mischung des geförderten Schwachgases mit Luft, ist ein Venturigasmischer vorgesehen, der dem Gasmotor vorgeschaltet ist. Der Venturigasmischer ermöglicht bauartbedingt eine Mischung des CH₄-haltigen brennbaren Gases und des zugeführten Luftstromes im Verhältnis von etwa 1 : 3,5 bis 1 : 25. Dies ist der in der Praxis übliche Regelbereich eines Venturigasmischers. Der bauartbedingte Regelbereich eines Venturigasmischers hat zur Folge, dass bei einem Schwachgas mit niedriger CH₄-Konzentration von unter 30 Vol-% durch die für den Betrieb des Venturigasmischers notwendige Zuführung von Luft ein für den Gasmotor zu dünnes, also nicht brennfähiges Luft/Schwachgasgemisch entsteht.

Aus DE 41 37 573 A1 ist ein Venturigasmischer zum Mischen eines brennbaren Gases und Luft für einen Verbrennungsmotor bekannt. Um die Funktion des Venturigasmischers bei schwankenden Gasqualitäten aufrechterhalten zu können, ist die Menge des mittels eines Treibluftstromes angesaugten Brenngases über einen axial verstellbar gelagerten und konisch ausgebildeten Venturikörper, der einen Umfangsspalt zum Ansaugen des Brenngases begrenzt, einstellbar. Gleichwohl bleibt das Problem, dass bei Schwachgasen mit sinkendem CH₄-Gehalt weniger Luft benötigt wird, um ein brennfähiges Luft/Gasgemisch zu erzeugen. Mit sinkender Luftmenge sinkt jedoch gleichzeitig die Luftgeschwindigkeit und die Saugdynamik des Venturiprinzips lässt nach.

Aus DE 44 46 842 A1 ist ein Verfahren zum Zuleiten eines gasförmigen Brennstoffs in einen Vormischbrenner bekannt, bei dem ein gasförmiger Brennstoff und Verbrennungsluft in zwei oder mehreren Stufen miteinander vermischt werden. Bei dem bekannten Verfahren wird Brennstoff in eine Vormischzone mit der Maßgabe eingebracht, dass das Vorgemisch außerhalb der Zündgrenze eines Brenners liegt. Das Vorgemisch wird danach einer sich anschließenden Endmischzone zugeleitet, um dort mit zusätzlichem Brenngas und/oder mit sauerstoffhaltigem Sekundärgas vermischt und als Endgemisch einer Verbrennungszone zugeführt zu werden. Das Verfahren wird vor dem Hintergrund angewendet, dass ein für den Verbrennungsprozess genügend angereichertes Brenngas verwendet wird und durch eine gute Durchmischung der verwendeten Gase geringere NOₓ-Emissionen realisiert werden können.

Aus WO 2007/104046 A2 ist ein Verfahren zum Betrieb von Gasmotoren mit einem CH₄-haltigen Schwachgas bekannt, bei dem das Schwachgas in Teilströme aufgeteilt wird. Ein erster Teilstrom des Schwachgases wird einem Gasmischer zugeleitet und dort mit einem Luftstrom zu einem Luft/Schwachgasgemisch gemischt. Ein zweiter Teilstrom des Schwachgases wird einem zweiten Gasmischer zugeleitet und dort mit dem Luft/Schwachgasgemisch gemischt. Das aus dem Gasmischer austretende Luft/Schwachgasgemisch kann einem Gasmotor oder einem dem Gasmotor vorgeschalteten Turbolader als zündfähiges Gasgemisch zugeführt werden. Bei dem bekannten Verfahren werden als Gasmischer Diaphragma-Mischer eingesetzt, die als wesentliche Bestandteile ein Diaphragma, einen federbelasteten Kolben, ein Gasventil sowie ein Lufteinlassventil aufweisen. Bauartbedingt eignet sich ein Diaphragma-Mischer nur für die Zuführung kleiner Gasströme, so dass eine Serienschaltung mehrerer Gasmischer dieser Bauart notwendig ist.

Vor dem erläuterten technologischen Hintergrund liegt der Erfindung die Aufgabe zugrunde, ein Verfahren anzugeben, mit dem Gasmotoren mit einem Schwachgas betrieben werden können, welches eine CH₄-Konzentration von unter 25 Vol-% aufweist, insbesondere ohne an dem Motor Veränderungen vorzunehmen.

Gegenstand der Erfindung und Lösung dieser Aufgabe ist ein Verfahren nach Anspruch 1. Das Verfahren eignet sich insbesondere zur Ertüchtigung bestehender Gasmotorenanlagen, die zur Verbrennung von Grubengas oder Deponiegas mit einem Methangehalt von zumindest 30 Vol-% ausgelegt wurden und infolge einer Abnahme des CH₄-Gehaltes im abgesaugten Gasstrom zukünftig mit einem Schwachgas betrieben werden müssen, das einen Methangehalt von weniger als 25 Vol-% aufweist.

Erfindungsgemäß wird das methanhaltige Schwachgas in zwei Teilströme aufgeteilt, wobei ein erster Teilstrom einem ersten Venturigasmischer zugeleitet und dort mit einem als Treibstrahl zugeführten Luftstrom zu einem Luft/Schwachgasgemisch gemischt wird und wobei ein zweiter Teilstrom des Schwachgases einem zweiten Venturigasmischer zugeleitet und dort mit dem nun als Treibstrahl wirkenden Luft/Schwachgasgemisch gemischt wird. Das aus dem zweiten Venturigasmischer austretende Luft/Schwachgasgemisch wird einem Gasmotor oder einem dem Gasmotor vorgeschalteten Turbolader als zündfähiges Gasgemisch zugeführt. Im Unterschied zum ersten Venturigasmischer wird dem zweiten Venturigasmischer ein bereits mit CH₄ angereichertes Luft/Schwachgasgemisch als Treibstrahl zugeführt. Dadurch kann eine weitere Verdünnung mit Luft vermieden und im Ergebnis ein Gas/Luftgemisch mit einer höheren CH₄-Konzentration erzeugt werden.

Einerseits fördern die eingesetzten Venturigasmischer nach dem Venturiprinzip das CH₄-haltige Schwachgas und andererseits mischen sie das Schwachgas mit Luft zu einem brennfähigen Gasgemisch. Das Mischverhältnis dieses Gasgemisches ist zwischen dem ersten zugeführten Schwachgasteilstrom und dem als Treibstrahl zugeführten Luftstrom in dem ersten Venturigasmischer durch Verstellmittel, die den Zufluss des Schwachgasteilstromes beeinflussen, veränderbar. Mit dem Unterschied, dass dem zweiten Venturigasmischer ein Luft/Schwachgasgemisch als Treibstrahl zugeführt wird, ist das Mischverhältnis im zweiten Venturigasmischer analog veränderbar.

Erfindungsgemäß sind die Verstellmittel der beiden Venturigasmischer zum Zwecke einer synchronen Verstellung mechanisch gekoppelt. Eine auf das Verstellmittel eines der beiden Venturigasmischer wirkende Stelleinrichtung bewegt somit beide Verstellmittel.

Insbesondere für den Kaltstart des Gasmotors kann dem Luft/Schwachgasgemisch zur Verbesserung der Brennfähigkeit ein zusätzlicher CH₄-reicher Gaststrom zugeführt werden.

Gegenstand der Erfindung ist auch eine Mischvorrichtung nach Anspruch 4 zur Durchführung des beschriebenen Verfahrens. Vorteilhafte Ausgestaltungen dieser Mischvorrichtung werden in den Ansprüchen 5 und 6 beschrieben und im Folgenden anhand eines Ausführungsbeispiels erläutert. Es zeigen schematisch:
Fig. 1 Draufsicht einer Mischvorrichtung und
Fig. 2 Seitenansicht einer Mischvorrichtung.

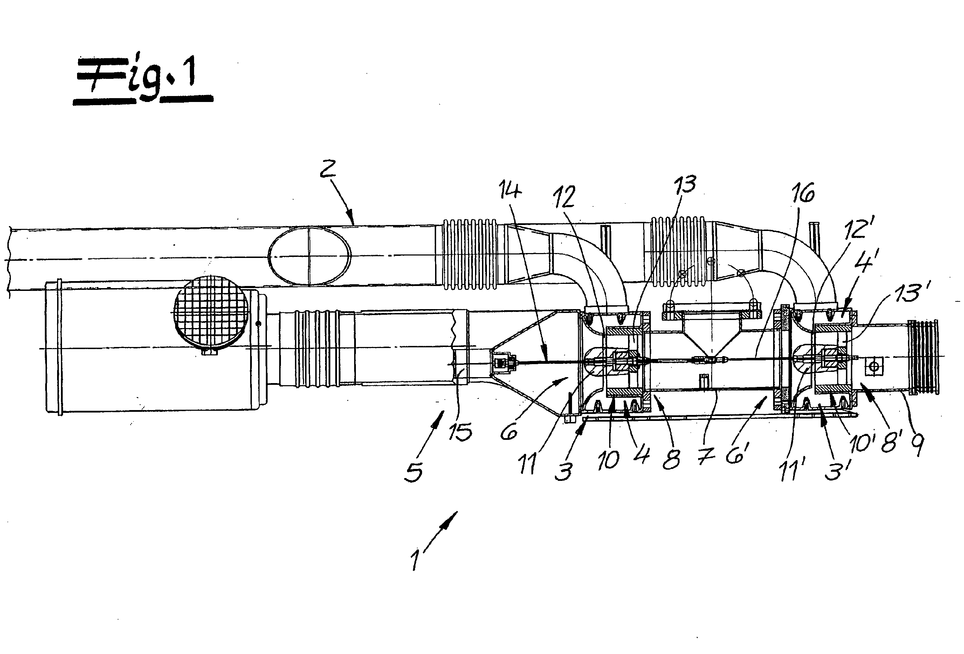

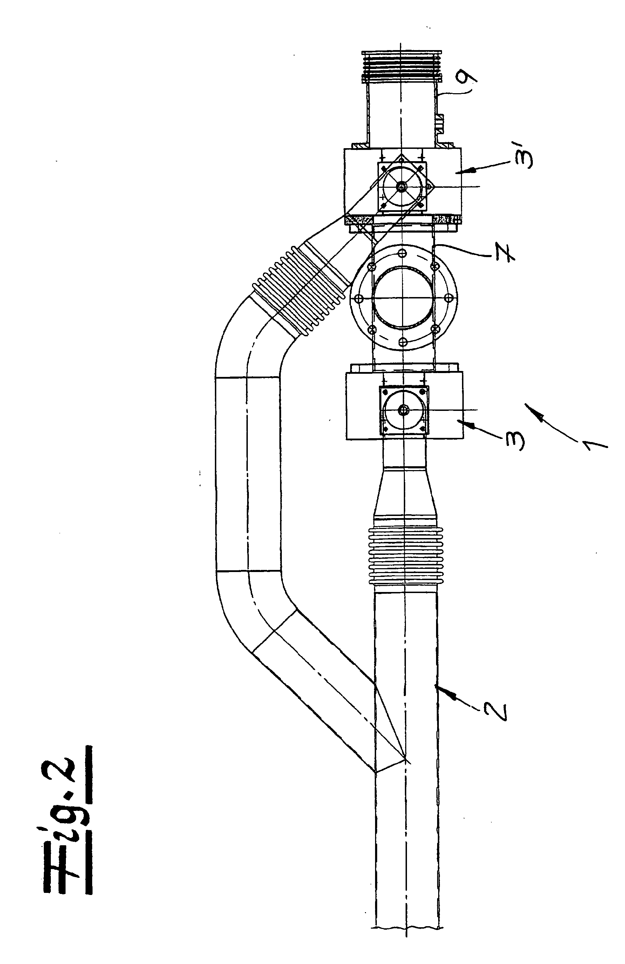

Die in den Fig. 1 bis 2 dargestellte Mischvorrichtung 1 umfasst zwei mit einer Gaszuführung 2 verbundene und in Strömungsrichtung hintereinander angeordnete Venturigasmischer 3, 3', Verstellmittel 4, 4' zur Veränderung der aus der Gaszuführung 2 in die Venturigasmischer 3, 3' einströmenden Gasmengen, einen Luftansaugtrakt 5, der an die Einlassseite 6 des in Strömungsrichtung ersten Venturigasmischer 3 angeschlossen ist und der Zuführung eines in den Venturigasmischer 3 eintretenden Treibstrahls dient, ein Vormischrohr 7, welches die Auslassseite 8 des ersten Venturigasmischers 3 mit der Einlassseite 6' des in Strömungsrichtung zweiten Venturigasmischers 3' verbindet und der Zuführung eines in den zweiten Venturigasmischer 3' eintretetenden Treibstrahls dient, sowie ein Mischrohr 9, welches in Strömungsrichtung an der Auslassseite 8' des zweiten Venturigasmischers 3' angeordnet ist und an einen Gasmotor oder einen dem Gasmotor vorgeschalteten Turbolader angeschlossen ist.

Die Venturigasmischer 3, 3' weisen jeweils einen in einem sich verjüngenden Rohrstück 10, 10' zentral angeordneten axial verstellbare gelagerten Venturikörper 11, 11' auf, dem zum Ansaugen des Schwachgases in den Treibstrahl ein Umfangsspalt 12, 12' zugeordnet ist. Der Umfangsspalt 12, 12' wird durch ein Rohrstück, welches durch Stege 13, 13' mit dem Venturikörper 11, 11' verbunden ist, begrenzt. Zur Regulierung der einströmenden Schwachgasmenge wird das Rohrstück mit dem Venturikörper 11, 11' axial verschoben. Dazu ist einer der beiden Venturikörper 11, 11' mit einer Verstelleinrichtung 14 verbunden, die durch einen Verstellmotor 15 verstellt wird. Über eine in der Länge verstellbare Einstellstange 16 sind die beiden Venturikörper 11, 11' der Venturigasmischer 3, 3' gekoppelt und somit synchron einstellbar. Durch die längenverstellbare Einstellstange 16 können die Umfangsspalte 12, 12' relativ zueinander justiert werden. Die Einstellung kann so vorgenommen werden, dass die Umfangsspalte stets gleich groß sind. Es versteht sich, dass mittels der längsverstellbaren Einstellstange 16 auch unterschiedlich breite Umfangsspalte 12, 12' eingestellt werden können, wenn eine Aufteilung der Schwachgasteilströme in unterschiedlich große Schwachgasteilströme gewünscht wird. Die Venturikörper 3, 3' sind lösbar in der Mischvorrichtung angeordnet und somit austauschbar.

## Patentansprüche

1. Verfahren zum Betrieb von Gasmotoren mit einem CH₄-haltigen Schwachgas,
bei dem das Schwachgas in zwei Teilströme aufgeteilt und ein erster Teilstrom einem ersten Gasmischer zugeleitet wird und dort mit einem Luftstrom zu einem Luft/Schwachgasgemisch gemischt wird,
und bei dem ein zweiter Teilstrom des Schwachgases einem zweiten Gasmischer zugeleitet wird und dort mit dem Luft/Schwachgasgemisch gemischt wird,
wobei das aus dem zweiten Gasmischer austretende Luft/Schwachgasgemisch einem Gasmotor oder einem dem Gasmotor vorgeschalteten Turbolader als zündfähiges Gasgemisch zugeführt wird, **dadurch gekennzeichnet, dass** als Gasmischer Venturigasmischer (3, 3') verwendet werden,
wobei in einem ersten Venturigasmischer (3) das Mischverhältnis zwischen dem ersten Schwachgasteilstrom und einem als Treibstrahl zugeführten Luftstrom durch Verstellmittel (4), die den Zufluss des Schwachgasteilstromes beeinflussen, verändert wird,
wobei in einem zweiten Venturigasmischer (3') das Mischverhältnis zwischen dem zweiten Schwachgasteilstrom und dem als Treibstrahl zugeführten Luft/Schwachgasgemisch durch Verstellmittel (4'), die den Zufluss des Schwachgasteilstromes beeinflussen, verändert wird,
dass die Verstellmittel (4, 4') der Venturigasmischer (3, 3') mechanisch gekoppelt werden und
dass zur Synchronverstellung der Verstellmittel (4, 4') beider Venturigasmischer (3, 3') eine Stelleinrichtung auf das Verstellmittel (4) eines der beiden Venturigasmischer (3, 3') wirkt.

2. Verfahren nach Anspruch 1, **dadurch gekennzeichnet, dass** bei einem Kaltstart des Motors zur Steigerung der Brennfähigkeit dem Luft/Schwachgasgemisch ein CH₄-reicher Gasstrom zugeführt wird.

3. Verfahren nach Anspruch 1 oder 2, **dadurch gekennzeichnet, dass** als Schwachgas ein Grubengas oder ein Deponiegas verwendet wird.

4. Mischvorrichtung zur Durchführung des Verfahrens nach einem der Ansprüche 1 bis 3, mit
- zwei mit einer Gaszuführung (2) verbundenen in Strömungsrichtung hintereinander angeordnete Venturigasmischern (3, 3'),
- Verstellmittel (4, 4') zur Veränderung der aus der Gaszuführung (2) in die Venturigasmischer (3, 3') einströmenden Gasmengen,
- einem Luftansaugtrakt (5), der an die Einlassseite (6) des in Strömungsrichtung ersten Venturigasmischers (3) angeschlossen ist und der Zuführung eines in den Venturigasmischer (3) einströmenden Treibstrahls dient,
- einem Vormischrohr (7), welches die Auslassseite (8) des ersten Venturigasmischers (3) mit einer Einlassseite (6') des in Strömungsrichtung zweiten Venturigasmischers (3') verbindet und der Zuführung eines in den zweiten Venturigasmischer (3') eintretenden Treibstrahls dient, und
- einem Mischrohr (9), welches in Strömungsrichtung an der Auslassseite (8') des zweiten Venturigasmischers (3') angeordnet ist und an einen Gasmotor oder einen dem Gasmotor vorgeschalteten Turbolader angeschlossen ist,
wobei die Venturigasmischer (3, 3') jeweils einen in einem sich verjüngenden Rohrstück (10, 10') zentral angeordneten und axial verstellbar gelagerten Venturikörper (11, 11') aufweisen, dem zum Ansaugen des Schwachgases in den Treibstrahl ein Umfangsspalt (12, 12') zugeordnet ist,
wobei der Venturiköper (11, 11') eines der beiden Venturigasmischer (3, 3') mit einer Verstelleinrichtung (14) verbunden ist, die über einen Verstellmotor (15) betätigbar ist, und
wobei die Venturiköper (11, 11') der Venturigasmischer (3, 3') über eine in der Länge verstellbare Einstellstange (16) gekoppelt sind.

5. Mischvorrichtung nach Anspruch 4, **dadurch gekennzeichnet, dass** die Venturigasmischer (3, 3') ein den Umfangsspalt (12, 12') begrenzendes Rohrstück (10, 10') aufweisen, das axial verschiebbar gelagert ist.

6. Mischvorrichtung nach Anspruch 5, **dadurch gekennzeichnet, dass** der Venturikörper (11, 11') durch Stege (13, 13') mit dem Rohrstück (10, 10') verbunden ist.

## Claims

1. A method for operating gas engines using a lean gas containing CH₄,
in which the lean gas is divided into two part flows and a first part flow is fed to a first gas mixer and there mixed with an air flow supplied to give an air/lean gas mixture,
and in which a second part flow of the lean gas is supplied to a second gas mixer and there mixed with the air/lean gas mixture,
wherein the air/lean gas mixture exiting from the second gas mixer is supplied to a gas engine or a turbocharger connected upstream of the gas engine as ignitable gas mixture, **characterised in that** venturi gas mixers (3, 3') are used as gas mixers,
wherein in a first venturi gas mixer (3), the mixing ratio between the first lean gas part flow and an air flow supplied as forced jet is changed by adjustment means (4), which influence the supply of the lean gas part flow,
wherein in a second venturi gas mixer (3'), the mixing ratio between the second lean gas part flow and the air/lean gas mixture supplied as forced jet is changed by adjustment means (4'), which influence the supply of the lean gas part flow,
**in that** the adjustment means (4, 4') of the venturi gas mixers (3, 3') are mechanically coupled and
**in that** for the synchronous adjustment of the adjustment means (4, 4') of both venturi gas mixers (3, 3'), an actuator acts on the adjustment means (4) of one of the two venturi gas mixers (3, 3').

2. The method according to Claim 1, **characterised in that** in the event of a cold start of the engine, a CH₄-rich gas flow is supplied to the air/lean gas mixture to increase the combustibility.

3. The method according to Claim 1 or 2, **characterised in that** a firedamp or a landfill gas is used as lean gas.

4. A mixing device for carrying out the method according to one of Claims 1 to 3, with
- two venturi gas mixers (3, 3') connected to a gas supply (2) and arranged one behind the other in the flow direction,
- adjustment means (4, 4') for changing the gas quantities flowing out of the gas supply (2) into the venturi gas mixers (3, 3'),
- an air intake section (5), which is connected to the inlet side (6) of the first venturi gas mixer (3) in the flow direction and is used for supplying a forced jet entering the venturi gas mixer (3),
- a premix pipe (7), which connects the outlet side (8) of the first venturi gas mixer (3) to the inlet side (6') of the second venturi gas mixer (3') in the flow direction and is used for supplying a forced jet entering the second venturi gas mixer (3'), and
- a mixing pipe (9), which is arranged on the outlet side (8') of the second venturi gas mixer (3') in the flow direction and is connected to a gas engine or a turbocharger connected upstream of the gas engine,
wherein the venturi gas mixers (3, 3') in each case have a venturi body (11, 11') centrally arranged and axially displaceably mounted in a tapering pipe section (10, 10'), to which a circumferential gap (12, 12') is assigned for aspirating the lean gas into the forced jet,
wherein the venturi body (11, 11') of one of the two venturi gas mixers (3, 3') is connected to an adjustment apparatus (14), which can be actuated by means of an adjusting motor (15), and
wherein the venturi bodies (11, 11') of the venturi gas mixers (3, 3') are coupled via an adjusting rod (16) of adjustable length.

5. The mixing device according to Claim 4, **characterised in that** the venturi gas mixers (3, 3') have a pipe section (10, 10') delimiting the circumferential gap (12, 12'), which is axially displaceably mounted.

6. The mixing device according to Claim 5, **characterised in that** the venturi body (11, 11') is connected by webs (13, 13') to the pipe section (10, 10').

## Revendications

1. Procédé pour faire fonctionner des moteurs à gaz avec un gas pauvre contenant du CH₄,
pour lequel le gaz pauvre est divisé en deux flux partiels et un premier flux partiel est envoyé à un premier mélangeur de gaz et y est mélangé avec un flux d'air en un mélange air/gaz pauvre,
et pour lequel un deuxième flux partiel du gaz pauvre est envoyé à un deuxième mélangeur de gaz et y est mélangé avec le mélange air/gaz pauvre,
pour lequel le mélange air/gaz pauvre sortant du deuxième mélangeur de gaz est acheminé à un moteur à gaz ou un turbocompresseur monté en amont d'un moteur à gaz en tant que mélange de gaz inflammable, **caractérisé en ce que** des mélangeurs de gaz Venturi (3, 3') sont utilisés comme mélangeurs de gaz
pour lequel dans un premier mélangeur de gaz Venturi (3), le rapport de mélange entre le premier flux partiel de gaz pauvre et un flux d'air acheminé en tant que jet de propulsion est modifié par des moyens de réglage (4), qui ont un effet sur l'arrivée du flux partiel de gaz pauvre,
pour lequel dans un deuxième mélangeur de gaz Venturi (3'), le rapport de mélange entre le deuxième flux partiel de gaz pauvre et le mélange air/gaz pauvre acheminé en tant que jet de propulsion, est modifié par des moyens de réglage (4') qui ont un effet sur l'arrivée du flux partiel de gaz pauvre,
**en ce que** les moyens de réglage (4, 4') sont couplés mécaniquement aux mélangeurs de gaz Venturi (3, 3') et
**en ce que** pour le réglage synchrone des moyens de réglage (4, 4') des deux mélangeurs de gaz Venturi (3, 3'), un dispositif de réglage agit sur le moyen de réglage (4) d'un des deux mélangeurs de gaz Venturi (3, 3').

2. Procédé selon la revendication 1 **caractérisé en ce que** pour un démarrage à froid du moteur, un flux de gaz riche en CH₄ est apporté au mélange air/gaz pauvre pour augmenter la combustibilité.

3. Procédé selon la revendication 1 ou 2 **caractérisé en ce qu**'un grisou ou un gaz de déchet est utilisé en tant que gaz pauvre.

4. Dispositif de mélange pour exécuter le procédé selon l'une quelconque des revendications 1 à 3 avec
- deux mélangeurs de gaz Venturi (3, 3') disposés l'un derrière l'autre dans le sens de l'écoulement reliés à une alimentation de gaz (2),
- des moyens de réglage (4, 4') pour modifier les quantités de gaz arrivant de l'alimentation de gaz (2) dans les mélangeurs de gaz Venturi (3, 3'),
- un tractus d'aspiration d'air (5) qui est raccordé au côté d'admission (6) du premier mélangeur de gaz Venturi (3) dans le sens de l'écoulement et qui sert à l'acheminement d'un jet de propulsion arrivant dans le mélangeur de gaz (3),
- un conduit de prémélange (7), lequel relie le côté d'échappement (8) du premier mélangeur de gaz Venturi (3) à un côté d'admission (6') du deuxième mélangeur de gaz Venturi (3') dans le sens de l'écoulement et sert à l'acheminement d'un jet de propulsion entrant dans le deuxième mélangeur de gaz Venturi (3'), et
- un conduit de mélange (9), lequel est disposé dans le sens de l'écoulement sur le côté d'échappement (8') du deuxième mélangeur de gaz Venturi (3') et est raccordé à un moteur à gaz ou à un turbocompresseur monté en amont du moteur à gaz,
pour lequel les mélangeurs à gaz Venturi (3, 3') comportent respectivement un corps Venturi (11, 11') disposé centralement dans une pièce tubulaire (10, 10') se réduisant et logé de manière à pouvoir être réglé axialement, auquel est attribué un interstice périphérique (12, 12') pour aspirer le gaz pauvre dans le jet de propulsion,
pour lequel le corps Venturi (11, 11') d'un des deux mélangeurs de gaz Venturi (3, 3') est relié à un dispositif de réglage (14) qui peut être actionné par un servomoteur (15), et
pour lequel les corps Venturi (11, 11') des mélangeurs de gaz Venturi (3, 3') sont couplés par une tige d'ajustage (16) réglable dans la longueur.

5. Dispositif de mélange selon la revendication 4 **caractérisé en ce que** les mélangeurs de gaz Venturi (3, 3') comportent une pièce tubulaire (10, 10') limitant l'interstice périphérique (12, 12') qui est logée pouvant être déplacée dans le sens axial.

6. Dispositif de mélange selon la revendication 5 **caractérisé en ce que** le corps Venturi (11, 11') est relié par des entretoises (13, 13') à la pièce tubulaire (10, 10').
